# EUROPEAN PATENT APPLICATION

(11) **EP 3 462 345 A1**
(43) Date of publication of application: **03.04.2019**
(21) Application number: 18183426.8
(22) Date of filing: 13.07.2018
(51) Int. Cl.: G06F 17/50

(54) **METHOD AND APPARATUS FOR ADJUSTING PRODUCT MODEL, AND STORAGE MEDIUM**

(30) Priority: 30.09.2017 CN 201710923348
(71) Applicant: Siemens Aktiengesellschaft, 80333 München (DE)
(72) Inventor: CAO, Dian Song, Beijing, 100176 (CN)
(74) Representative: Isarpatent

(57) **Abstract**

Disclosed in embodiments of the present invention are a method and apparatus for adjusting a product model, and a storage medium. The method for adjusting a product model comprises: determining a life cycle data type of a product corresponding to the product model (101) ; collecting, in a life cycle of the product, a parameter value which is associated with the product and complies with the life cycle data type (102); adjusting the product model on the basis of the parameter value collected (103). In an embodiment of the present invention, the product model is adjusted on the basis of a parameter of a product life cycle type, so that the product model can reflect the real state of the product throughout the life cycle, thereby improving the accuracy of the product model.

## Description

### Technical field

The present invention relates to the technical field of product modeling, in particular to a method and apparatus for adjusting a product model, and a storage medium.

### Background art

System modeling refers to the necessary simplification of an entity being studied, and the use of a suitable form of realization or rule to describe the main features of the entity. A system imitation obtained by system modeling is called a model. At present, many tasks relating to product design, development, testing and services can be realized on the basis of physical prototypes and models. A digital model of a product (abbreviated as product model) is the basis for completing these tasks.

However, a product model is generally created in a design stage, and is unable to reflect the real state of the product corresponding to the product model throughout the life cycle.

### Content of the invention

Embodiments of the present invention propose a method and apparatus for adjusting a product model, and a storage medium.

The technical solution of the embodiments of the present invention is as follows:
a method for adjusting a product model, comprising:
determining a life cycle data type of a product corresponding to the product model;
collecting, in a life cycle of the product, a parameter value which is associated with the product and complies with the life cycle data type;
adjusting the product model on the basis of the parameter value collected.

Clearly, in an embodiment of the present invention, the product model is adjusted on the basis of a parameter of a product life cycle type, so that the product model can reflect the real state of the product throughout the life cycle, thereby improving the accuracy of the product model.

In one embodiment, the life cycle data type comprises one or more design parameters of the product;
the step of collecting, in a life cycle of the product, a parameter value which is associated with the product and complies with the life cycle data type, comprises: acquiring, in a production process of the product, a parameter value of the one or more design parameters from a product data management system or a manufacturing execution system.

Clearly, the product life cycle in an embodiment of the present invention comprises the production process, and the parameter value of the design parameter can be acquired by means of the product data management system or manufacturing execution system, hence the product model can be adaptively improved on the basis of a real value in the production process.

In one embodiment, the life cycle data type comprises one or more performance indices of the product;
the step of collecting, in a life cycle of the product, a parameter value which is associated with the product and complies with the life cycle data type, comprises: acquiring, in a use process of the product, an index value of the one or more performance indices from a manufacturing execution system or an industrial Internet of Things.

Clearly, the product life cycle in an embodiment of the present invention comprises the use process, and the parameter value of the design parameter can be acquired by means of the manufacturing execution system or industrial Internet of Things, hence the product model can be adaptively improved on the basis of a real value in the use process.

In one embodiment, the life cycle data type comprises one or more design parameters of the product and one or more performance indices of the product;
the step of collecting, in a life cycle of the product, a parameter value which is associated with the product and complies with the life cycle data type, comprises: acquiring, in a production process of the product, a parameter value of the one or more design parameters from a product data management system or a manufacturing execution system, and acquiring, in a use process of the product, an index value of the one or more performance indices from a manufacturing execution system or an industrial Internet of Things. Hence, in an embodiment of the present invention, real values in the production process and the use process can be used to adaptively improve the data model.

In one embodiment, the method also comprises:
generating a unique identifier of the life cycle data type;
the step of collecting a parameter value which is associated with the product and complies with the life cycle data type comprises: sending the unique identifier of the life cycle data type and a data source of the life cycle data type to a collecting side;
receiving, from the collecting side, a parameter value which originates in the data source, is identified using the unique identifier, is associated with the product and complies with the life cycle data type.

Clearly, in an embodiment of the present invention, the generation of the unique identifier for the life cycle data type facilitates the locating, tracking and acquisition of life cycle data throughout the life cycle.

In one embodiment, the collecting side comprises at least one of the following:
a product data management system; a manufacturing execution system; an industrial Internet of Things.

In one embodiment, the step of adjusting the product model on the basis of the parameter value collected comprises:
inputting the parameter value collected into the product model, enabling the product model to adjust a performance index or design parameter included in the product model on the basis of a result of comparing a statistical analysis result of the parameter value with a predetermined threshold; or
inputting the parameter value collected into a simulation tool, and adjusting a performance index or design parameter included in the product model on the basis of an output result of the simulation tool.

Hence, in embodiments of the present invention, it is possible to adjust the product model in more than one way using real values acquired in the life cycle, thereby increasing the accuracy of the product model.

An apparatus for adjusting a product model comprises:
a data type determining module, for determining a life cycle data type of a product corresponding to the product model;
a parameter value collecting module, for collecting, in a life cycle of the product, a parameter value which is associated with the product and complies with the life cycle data type;
a product model adjusting module, for adjusting the product model on the basis of the parameter value collected.

Clearly, in an embodiment of the present invention, the product model is adjusted on the basis of a parameter of a product life cycle type, so that the product model can reflect the real state of the product throughout the life cycle, thereby improving the accuracy of the product model.

In one embodiment, the life cycle data type comprises one or more design parameters of the product;
the parameter value collecting module is used for acquiring, in a production process of the product, a parameter value of the one or more design parameters from a product data management system or a manufacturing execution system.

Clearly, the product life cycle in an embodiment of the present invention comprises the production process, and the parameter value of the design parameter can be acquired by means of the product data management system or manufacturing execution system, hence the product model can be adaptively improved on the basis of a real value in the production process.

In one embodiment, the life cycle data type comprises one or more performance indices of the product;
the parameter value collecting module is used for acquiring, in a use process of the product, an index value of the one or more performance indices from a manufacturing execution system or an industrial Internet of Things.

Clearly, the product life cycle in an embodiment of the present invention comprises the use process, and the parameter value of the design parameter can be acquired by means of the manufacturing execution system or industrial Internet of Things, hence the product model can be adaptively improved on the basis of a real value in the use process.

In one embodiment, the life cycle data type comprises one or more design parameters of the product and one or more performance indices of the product;
the parameter value collecting module is used for acquiring, in a production process of the product, a parameter value of the one or more design parameters from a product data management system or a manufacturing execution system, and for acquiring, in a use process of the product, an index value of the one or more performance indices from a manufacturing execution system or an industrial Internet of Things.

Hence, in an embodiment of the present invention, real values in the production process and the use process can be used to adaptively improve the data model.

In one embodiment, also included is:
an identifier generating module, for generating a unique identifier of the life cycle data type,
wherein the parameter value collecting module is used for sending the unique identifier of the life cycle data type and a data source of the life cycle data type to a collecting side, and receiving, from the collecting side, a parameter value which originates in the data source, is identified using the unique identifier, is associated with the product and complies with the life cycle data type.

Clearly, in an embodiment of the present invention, the generation of the unique identifier for the life cycle data type facilitates the locating, tracking and acquisition of life cycle data throughout the life cycle.

In one embodiment, the collecting side comprises at least one of the following:
a product data management system; a manufacturing execution system; an industrial Internet of Things.

In one embodiment, the product model adjusting module is used for inputting the parameter value collected into the product model, enabling the product model to adjust a performance index or design parameter included in the product model on the basis of a result of comparing a statistical analysis result of the parameter value with a predetermined threshold; or is used for inputting the parameter value collected into a simulation tool, and adjusting a performance index or design parameter included in the product model on the basis of an output result of the simulation tool. Hence, in embodiments of the present invention, it is possible to adjust the product model in more than one way using real values acquired in the life cycle, thereby increasing the accuracy of the product model.

A storage medium, having a machine-readable instruction stored therein, the machine-readable instruction being used for executing any one of the methods described above.

### Description of the accompanying drawings

Fig. 1 is a flow chart of the method for adjusting a product model according to an embodiment of the present invention.
Fig. 2 is a schematic diagram of a processing procedure for adjusting a product model on the basis of life cycle data collected in a production process according to an embodiment of the present invention.
Fig. 3 is a demonstrative flow chart of the processing procedure shown in fig. 2.
Fig. 4 is a schematic diagram of a processing procedure for adjusting a product model on the basis of life cycle data collected in a use process according to an embodiment of the present invention.
Fig. 5 is a demonstrative flow chart of the processing procedure shown in fig. 4.
Fig. 6 is a schematic diagram of a processing procedure for adjusting a product model on the basis of life cycle data collected in a production process and a use process according to an embodiment of the present invention.
Fig. 7 is a demonstrative flow chart of the processing procedure shown in fig. 6.
Fig. 8 is a structural diagram of an apparatus for adjusting a product model according to an embodiment of the present invention.

Key to the drawings:

| Label | Meaning |
|---|---|
| 101 - 103 | steps |
| 10 | product design process |
| 20 | product production process |
| 30 | product use process |
| 40 | life cycle timeline |
| 21 | product model |
| 22 | simulation tool |
| 23 | data definer |
| 24 | data collector |
| 25 | first collecting side |
| 26 | second collecting side |
| 801 | data type determining module |
| 802 | parameter value collecting module |
| 803 | product model adjusting module |
| 803 | identifier generating module |

### Particular embodiments

The present invention is explained in further detail below in conjunction with the accompanying drawings and embodiments, to clarify the technical solution and advantages thereof. It should be understood that the particular embodiments described here are merely intended to explain the present invention elaboratively, not to define the scope of protection thereof.

The solution of the present invention is expounded below by describing a number of representative embodiments, in order to make the description concise and intuitive. The large number of details in the embodiments are merely intended to assist with understanding of the solution of the present invention. However, obviously, the technical solution of the present invention need not be limited to these details when implemented. To avoid making the solution of the present invention confused unnecessarily, some embodiments are not described meticulously, but merely outlined. Hereinbelow, "comprises" means "including but not limited to", while "according to..." means "at least according to..., but not limited to only according to...". In line with the linguistic customs of Chinese, in cases where the quantity of a component is not specified hereinbelow, this means that there may be one or more of the component; this may also be interpreted as meaning at least one. In an embodiment of the present invention, a method is proposed for using product life cycle data acquired in a product life cycle to adjust a product model.

The product model is a digital model of a product. The product may be a physical product having a specific physical shape, e.g. a production component in an industrial field, and the corresponding product model is a 3D design model of the component. The product could also be a software module without a specific shape, e.g. control software in an automatic control field, in which case the corresponding product model is a control model.

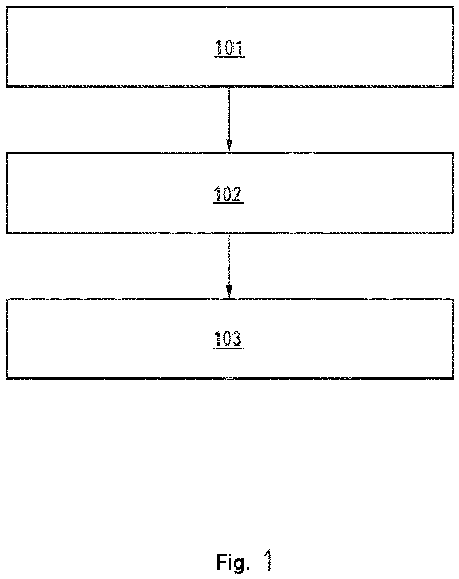

Fig. 1 is a flow chart of the method for adjusting a product model according to an embodiment of the present invention.

As Fig. 1 shows, the method comprises:
Step 101: determining a life cycle data type of the product corresponding to the product model.

Here, the life cycle of the product may comprise a product design process, a product production process and a product use process. In the product design process, a developer develops the product model (e.g. a 3D digital model of the product) on the basis of a predetermined requirement. In the product production process, a manufacturer produces the product on the basis of the product model developed in the product design process . In the product use process, a user uses the product produced in the product production process. The life cycle data type refers to a data type which is generated in the life cycle of the product and is associated with a specific design parameter or performance index of the product. For example, the life cycle data type of the product may comprise a design parameter of the product or a performance index of the product, wherein the number of design parameters may be one or more, and the number of performance indices may also be one or more. The design parameter may be shown directly in a product model number, e.g. the length of a physical component, etc. Performance specifications specify product performance and operating conditions, and cannot be covered by design parameters, e.g. locating precision of a moving component or average working time of a fault, etc.

In general, it is possible to acquire a specific parameter value of a design parameter in the product production process, and to acquire a specific index value of a performance index in the product use process.

For instance, supposing that the product is a valve bolt hole, the life cycle data type may comprise valve bolt hole processing precision as a design parameter and valve bolt hole life as a performance index.

Step 102: collecting, in the life cycle of the product, a parameter value which is associated with the product and complies with the life cycle data type.

Here, when the life cycle data type comprises one or more design parameters of the product, a parameter value of one or more design parameters may be acquired from a product data management (PDM) system or a manufacturing execution system (MES) in the production process of the product.

PDM systems are widely used in various industrial fields at present. The PDM system can manage product structure and configuration, component definitions and design data, CAD drawing files, engineering analysis and verification data, manufacturing projects and specifications, NC programming files, image files (e.g. photographs, modeling images, scanned images), product manuals, software products (programs, inventories, functions), various electronic reports, cost accounting, product notes, etc., project planning books, multimedia audiovisual products, hard copy files, other electronic data, etc. Preferably, in the production process of the product, a parameter value of one or more design parameters may be actively requested from the PDM system, or a parameter value of one or more design parameters actively provided by the PDM system may be received.

An MES system is a product informatization management system facing a workshop execution layer of a manufacturing firm. The MES can provide management modules for the firm including manufacturing data management, project schedule management, production schedule management, inventory management, quality management, human resource management, working centre/equipment management, tool/tooling management, purchase management, cost management, project dashboard management, production process control, underlying data integration analysis and upper-layer data integration decomposition. Preferably, in the production process of the product, a request to acquire a parameter value of one or more design parameters may be actively made to the MES system, or a parameter value of one or more design parameters actively provided by the PDM system may be received.

In one embodiment, when the life cycle data type comprises one or more performance indices of the product, an index value of one or more performance indices may be acquired from an MES system or an industrial Internet of Things in the use process of the product. The industrial Internet of Things continuously integrates various collecting or controlling sensors or controllers having perception and monitoring ability into every step of an industrial production process, thereby vastly increasing manufacturing efficiency, improving product quality, reducing product costs and resource consumption, and finally raising traditional industry to a new, intelligent stage. Preferably, in the use process of the product, a request to acquire a parameter value of one or more design parameters may be actively made to the MES system or industrial Internet of Things, or a parameter value of one or more design parameters actively provided by the MES system or industrial Internet of Things may be received.

Step 103: adjusting the product model on the basis of the parameter value collected.

In one embodiment, the parameter value collected is inputted into the product model, enabling the product model to adjust a performance index or design parameter included in the product model on the basis of a result of comparing a statistical analysis result of the parameter value with a predetermined threshold.

In another embodiment, the parameter value collected is inputted into a simulation tool, and a performance index or design parameter included in the product model is adjusted on the basis of an output result of the simulation tool.

In another embodiment, the method may further comprise: generating a unique identifier of the life cycle data type. At this time, the operation of collecting a parameter value which is associated with the product and complies with the life cycle data type in step 102 comprises: sending the unique identifier of the life cycle data type and a data source of the life cycle data type to a collecting side; and receiving, from the collecting side, a parameter value which originates in the data source, is identified using the unique identifier, is associated with the product and complies with the life cycle data type. Preferably, the collecting side comprises a PDM system, an MES system, an industrial Internet of Things or another third-party database, etc.

Clearly, an embodiment of the present invention also defines a unique identifier for each life cycle data type. For example, the unique identifier comprises a combination of an organization name, a model name and a parameter index name. For example, net.siemens.motor.model1234.para1234. Since the life cycle data and the unique identifier thereof are defined in a product design stage, the unique identifier can facilitate the collecting of corresponding life cycle data during product manufacture and use. Demonstrative embodiments of embodiments of the present invention are described below in conjunction with particular examples.

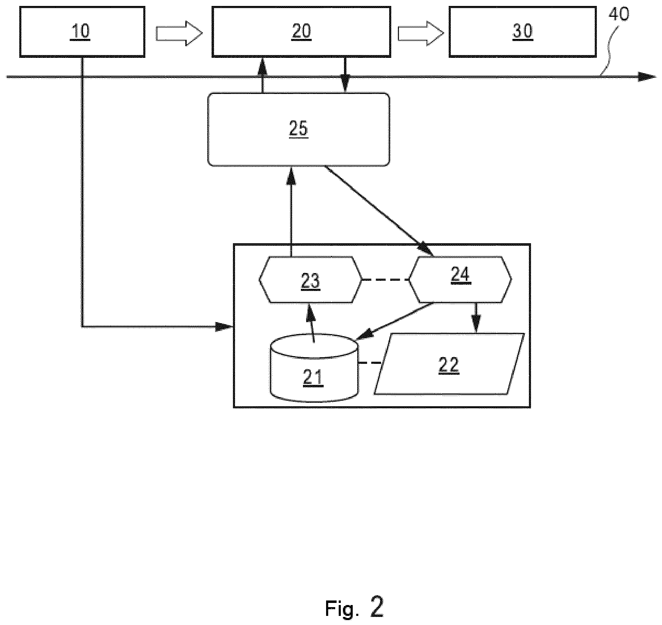

Fig. 2 is a schematic diagram of a processing procedure for adjusting a product model on the basis of life cycle data collected in a production process according to an embodiment of the present invention.

As shown in fig. 2, according to the direction indicated by the arrow of a life cycle timeline 40, the life cycle of a product successively goes through a product design process 10, a product production process 20 and a product use process 30.

An output result of the product design process 10 is a product model 21; a design parameter of the product and a unique identifier thereof are defined in the product model 21 by means of a data definer 23. The data definer 23 sends the unique identifier of the design parameter and a data source corresponding to the unique identifier to a first collecting side 25. In the product production process 20, the first collecting side 25 acquires a parameter value of the design parameter from the data source, packages the parameter value with the unique identifier, and sends same to a data collector 24 as collected data. The data collector 24 can send the collected data to the data model 21 directly, so that the product model 21 adjusts the design parameter included in the product model 21 on the basis of a result of comparing a statistical analysis result of the parameter value in the collected data with a predetermined threshold. The data collector 24 may also send the collected data to a simulation tool 22; the simulation tool 22 provides an output result to the product model 21 on the basis of the collected data, then the product model 21 adjusts the design parameter included in the product model 21 on the basis of the output result of the simulation tool 22. Preferably, the first collecting side 25 is implemented as a PDM system or MES system.

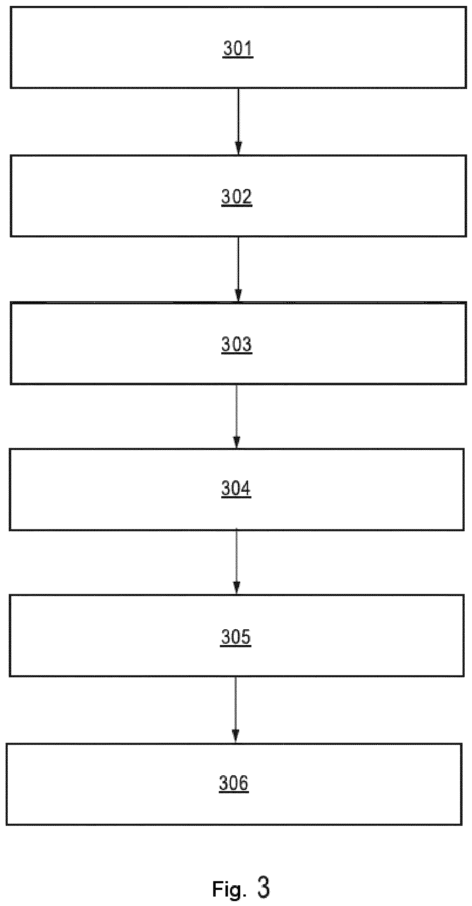

Fig. 3 is a demonstrative flow chart of the processing procedure shown in fig. 2.

As Fig. 3 shows, the method comprises:
Step 301: the design parameter of the product and the unique identifier thereof are defined in the product model 21 by means of the data definer 23.
Step 302: the data definer 23 sends the unique identifier of the design parameter and the data source corresponding to the unique identifier to the first collecting side 25.
Step 303: in the product production process 20, the first collecting side 25 acquires the parameter value of the design parameter from the data source.
Step 304: the first collecting side 25 packages the parameter value with the unique identifier, and sends same to the data collector 24 as collected data.
Step 305: the data collector 24 can send the collected data to the data model 21 directly or to the simulation tool 22.
Step 306: the product model 21 adjusts the design parameter included in the product model 21 on the basis of the result of comparing the statistical analysis result of the parameter value in the collected data with the predetermined threshold, or the product model 21 adjusts the design parameter included in the product model 21 on the basis of the output result of the simulation tool 22.

A complete example is described below on the basis of the abovementioned procedure.

For instance, supposing that the product model 21 is a bolt hole, the defined design parameter is the hole processing precision. The data definer 23 sends a unique identifier of the hole processing precision and a data source corresponding to the unique identifier to the first collecting side 25. In the product production process 20, the first collecting side 25 acquires specific values of the processing precision of a hole that is produced, packages these specific values with the unique identifier, and sends same to the data collector 24 as collected data. At this time, the data collector 24 can send the collected data to the data model 21 directly. The product model 21 performs statistical analysis of the specific values, and if it is discovered that the number of holes unable to attain the processing precision exceeds a predetermined threshold, then a design value for the hole processing precision in the product model 21 is downgraded, or a hole manufacturing process in the product model 21 is changed, or a hole processing factory in the product model 21 is changed, etc.

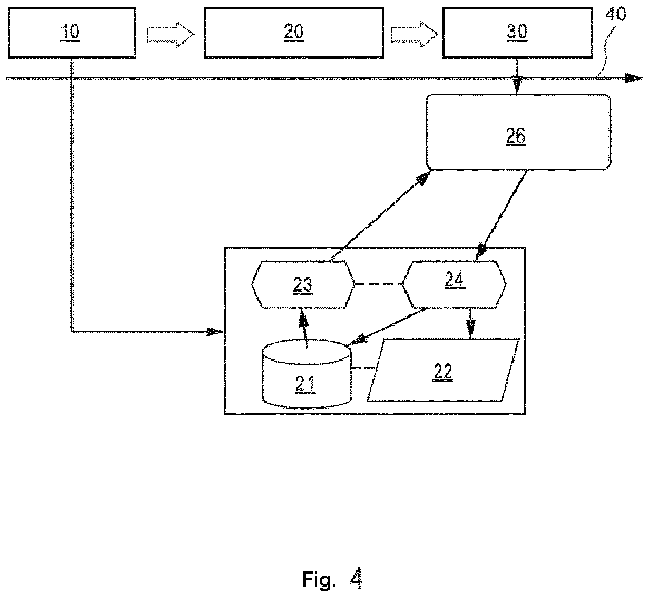

Fig. 4 is a schematic diagram of a processing procedure for adjusting a product model on the basis of life cycle data collected in a use process according to an embodiment of the present invention.

As shown in fig. 4, according to the direction indicated by the arrow of a life cycle timeline 40, the life cycle of a product successively goes through a product design process 10, a product production process 20 and a product use process 30.

An output result of the product design process 10 is a product model 21; a performance index of the product and a unique identifier thereof are defined in the product model 21 by means of a data definer 23. The data definer 23 sends the unique identifier of the performance index and a data source corresponding to the unique identifier to a second collecting side 26. In the product use process 30, the second collecting side 26 acquires an index value of the performance index from the data source, packages the index value with the unique identifier, and sends same to a data collector 24 as collected data. The data collector 24 can send the collected data to the data model 21 directly, so that the product model 21 adjusts the performance index included in the product model 21 on the basis of a result of comparing a statistical analysis result of the index value in the collected data with a predetermined threshold. The data collector 24 may also send the collected data to a simulation tool 22; the simulation tool 22 provides an output result to the product model 21 on the basis of the collected data, then the product model 21 adjusts the performance index included in the product model 21 on the basis of the output result of the simulation tool 22. Preferably, the second collecting side 26 is implemented as an MES system or an industrial Internet of Things.

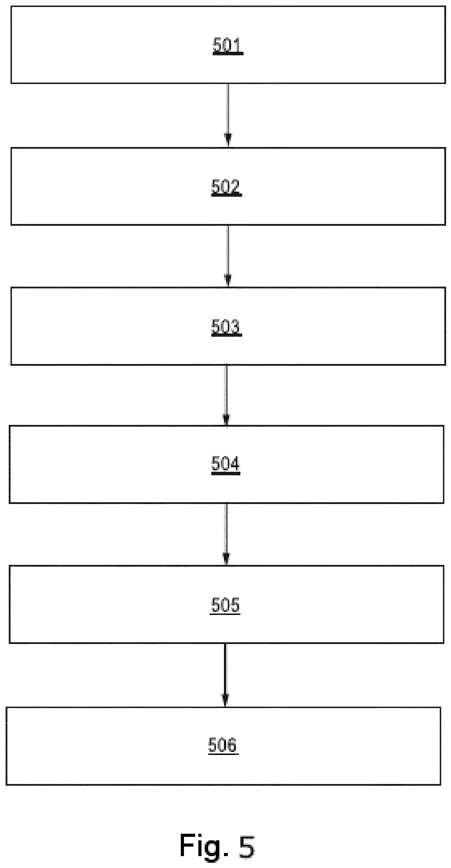

Fig. 5 is a demonstrative flow chart of the processing procedure shown in fig. 4.

As Fig. 5 shows, the method comprises:
Step 501: the performance index of the product and the unique identifier thereof are defined in the product model 21 by means of the data definer 23.
Step 502: the data definer 23 sends the unique identifier of the performance index and the data source corresponding to the unique identifier to the second collecting side 26.
Step 503: in the product use process 20, the second collecting side 26 acquires the index value of the performance index from the data source.
Step 504: the second collecting side 26 packages the index value with the unique identifier, and sends same to the data collector 24 as collected data.
Step 505: the data collector 24 can send the collected data to the data model 21 directly or to the simulation tool 22.
Step 506: the product model 21 adjusts the index value included in the product model 21 on the basis of the result of comparing the statistical analysis result of the index value in the collected data with the predetermined threshold, or the product model 21 adjusts the index value included in the product model 21 on the basis of the output result of the simulation tool 22.

A complete example is described below on the basis of the abovementioned procedure.

For instance, supposing the product model 21 is a bolt hole, the defined performance index is hole life. The data definer 23 sends a unique identifier of the hole life and a data source corresponding to the unique identifier to the first collecting side 25. In the product use process 30, the second collecting side 26 acquires specific values of the life of the hole that is produced, packages these specific values with the unique identifier, and sends same to the data collector 24 as collected data. At this time, the data collector 24 can send the collected data to the data model 21 directly. The product model 21 performs statistical analysis of the specific values, and if it is discovered that the number of holes unable to attain the life index exceeds a predetermined threshold, then a design value for the life index in the product model 21 is downgraded, or a hole manufacturing process in the product model 21 is changed, or a hole processing factory in the product model 21 is changed.

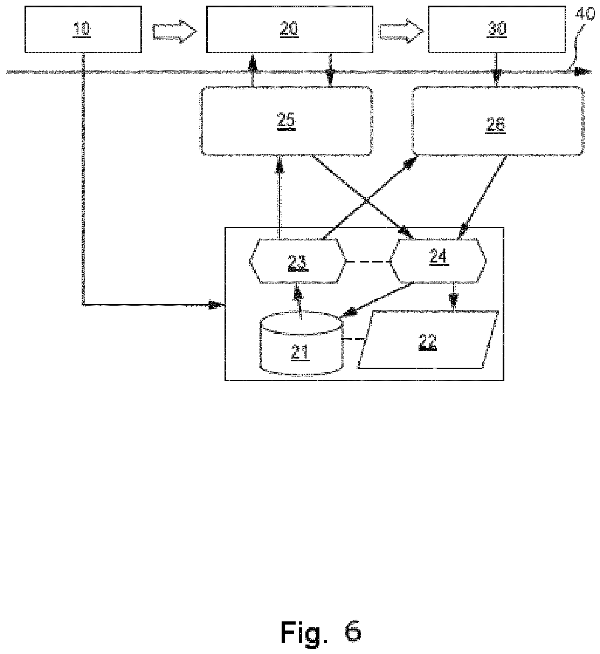

Fig. 6 is a schematic diagram of a processing procedure for adjusting a product model on the basis of life cycle data collected in a production process and a use process according to an embodiment of the present invention.

In fig. 6, according to the direction indicated by the arrow of a life cycle timeline 40, the life cycle of a product successively goes through a product design process 10, a product production process 20 and a product use process 30.

An output result of the product design process 10 is a product model 21; a design parameter of the product and a unique identifier thereof, and a performance index of the product and a unique identifier thereof, are defined in the product model 21 by means of a data definer 23. The data definer 23 sends the unique identifier of the design parameter and a data source corresponding to the unique identifier to a first collecting side 25, and sends the unique identifier of the performance index and a data source corresponding to the unique identifier to a second collecting side 26. In the product production process 20, the first collecting side 25 acquires specific values of the processing precision of a hole that is produced, packages these specific values with the unique identifier, and sends same to the data collector 24 as collected data. In the product use process 30, the second collecting side 26 acquires an index value of the performance index from the data source, packages the index value with the unique identifier, and sends same to a data collector 24 as collected data. The data collector 24 can send the collected data provided by the first collecting side 25 and the second collecting side 26 to the data model 21 directly, so that the product model 21 adjusts the performance index included in the product model 21 on the basis of a result of comparing a statistical analysis result of the index value in the collected data provided by the second collecting side 26 with a predetermined threshold, and adjusts the design parameter included in the product model 21 on the basis of a result of comparing a statistical analysis result of the parameter value in the collected data provided by the first collecting side 25 with a predetermined threshold. The data collector 24 may also send the collected data provided by the first collecting side 25 and the second collecting side 26 to a simulation tool 22; the simulation tool 22 provides an output result to the product model 21 on the basis of the collected data provided by the first collecting side 25 and the second collecting side 26, then the product model 21 adjusts the performance index and the design parameter included in the product model 21 on the basis of the output result of the simulation tool 22.

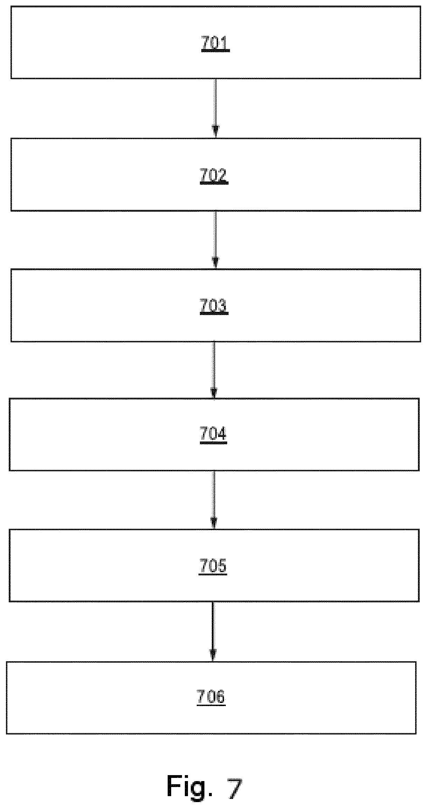

Fig. 7 is a demonstrative flow chart of the processing procedure shown in fig. 6.

As Fig. 7 shows, the method comprises:
Step 701: the design parameter of the product and the unique identifier thereof, and the performance index of the product and the unique identifier thereof, are defined in the product model 21 by means of the data definer 23.
Step 702: the data definer 23 sends the unique identifier of the design parameter and the data source corresponding to the unique identifier to the first collecting side 25, and sends the unique identifier of the performance index and the data source corresponding to the unique identifier to the second collecting side 26.
Step 703: in the product production process 20, the first collecting side 25 acquires a specific value of the design parameter from the design parameter data source; in the product use process 30, the second collecting side 26 acquires a specific value of the performance index from the performance index data source.
Step 704: the first collecting side 25 packages the specific value of the design parameter with the unique identifier of the design parameter, and sends same to the data collector 24 as collected data; the second collecting side 26 packages the specific value of the performance index with the unique identifier of the performance index, and sends same to the data collector 24 as collected data.
Step 705: the data collector 24 may send the collected data provided by the first collecting side 25 and the second collecting side 26 to the data model 21 directly, or to the simulation tool 22. Step 706: the product model 21 adjusts the design parameter included in the product model 21 on the basis of the result of comparing the statistical analysis result of the parameter value in the collected data with the predetermined threshold, and the product model 21 adjusts the index value included in the product model 21 on the basis of the result of comparing the statistical analysis result of the index value in the collected data with the predetermined threshold. Alternatively, the product model 21 adjusts the design parameter included in the product model 21, and adjusts the index value included in the product model 21, on the basis of the output result of the simulation tool 22.

Based on the description above, an embodiment of the present invention also proposes an apparatus for adjusting a product model.

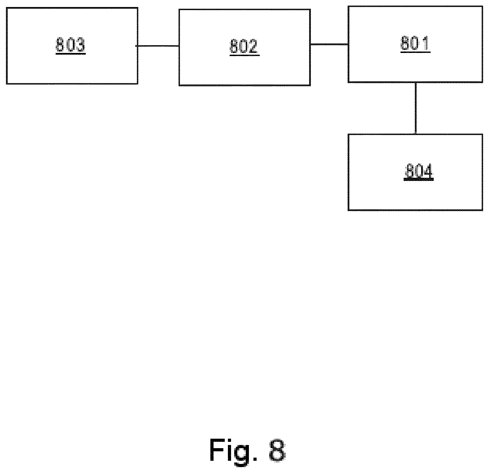

Fig. 8 is a structural diagram of an apparatus for adjusting a product model according to an embodiment of the present invention. As Fig. 8 shows, the apparatus comprises:
a data type determining module 801, for determining a life cycle data type of a product corresponding to the product model;
a parameter value collecting module 802, for collecting, in a life cycle of the product, a parameter value which is associated with the product and complies with the life cycle data type;
a product model adjusting module 803, for adjusting the product model on the basis of the parameter value collected.

In one embodiment, the life cycle data type comprises one or more design parameters of the product;
the parameter value collecting module 802 is used for acquiring, in a production process of the product, a parameter value of the one or more design parameters from a product data management system or a manufacturing execution system.

In one embodiment, the life cycle data type comprises one or more performance indices of the product;
the parameter value collecting module 802 is used for acquiring, in a use process of the product, an index value of the one or more performance indices from a manufacturing execution system or an industrial Internet of Things.

In one embodiment, the life cycle data type comprises one or more design parameters of the product and one or more performance indices of the product;
the parameter value collecting module 802 is used for acquiring, in a production process of the product, a parameter value of the one or more design parameters from a product data management system or a manufacturing execution system, and for acquiring, in a use process of the product, an index value of the one or more performance indices from a manufacturing execution system or an industrial Internet of Things.

In one embodiment, also included is:
an identifier generating module 804, for generating a unique identifier of the life cycle data type;
wherein the parameter value collecting module 802 is used for sending the unique identifier of the life cycle data type and a data source of the life cycle data type to a collecting side, and receiving, from the collecting side, a parameter value which originates in the data source, is identified using the unique identifier, is associated with the product and complies with the life cycle data type.

In one embodiment, the collecting side comprises at least one of the following: a product data management system; a manufacturing execution system; an industrial Internet of Things, etc.

In one embodiment, the product model adjusting module 803 is used for inputting the parameter value collected into the product model, enabling the product model to adjust a performance index or design parameter included in the product model on the basis of a result of comparing a statistical analysis result of the parameter value with a predetermined threshold; or is used for inputting the parameter value collected into a simulation tool, and adjusting a performance index or design parameter included in the product model on the basis of an output result of the simulation tool. Based on the detailed description above, an embodiment of the present invention also proposes an apparatus for adjusting a product model, comprising: at least one memory, for storing a machine-readable instruction; and at least one processor, for calling the machine-readable instruction to execute any one of the methods described above. The memory in the abovementioned information processing apparatus may be a high-speed random access memory, such as a dynamic random access memory (DRAM), static random access memory (SRAM), or another random storage solid-state storage device; or a non-volatile memory, such as one or more magnetic disk storage devices, optical disk storage devices, flash memory devices or other non-volatile storage devices.

It must be explained that not all of the steps and modules in the flows and structural diagrams above are necessary; certain steps or modules may be omitted according to actual requirements. The order in which steps are executed is not fixed, but may be adjusted as required. The partitioning of the modules is merely functional partitioning, employed for the purpose of facilitating description; during actual implementation, one module may be realized by multiple modules, and the functions of multiple modules may be realized by the same module; these modules may be located in the same device, or in different devices.

Hardware modules in the embodiments may be realized mechanically or electronically. For example, one hardware module may comprise a specially designed permanent circuit or logic device (such as a dedicated processor, such as an FPGA or ASIC) for completing a specific operation. The hardware module may also comprise a programmable logic device or circuit that is temporarily configured by software (e.g. comprising a general processor or another programmable processor) for executing a specific operation. The choice of whether to specifically use a mechanical method, or a dedicated permanent circuit, or a temporarily configured circuit (e.g. configured by software) to realize the hardware module can be decided according to considerations of cost and time.

Furthermore, each embodiment of the present application can be realized by means of a data processing program executed by a data processing device such as a computer. Clearly, the data processing program forms the present application. Furthermore, a data processing program stored in a storage medium is generally executed by reading the program directly from the storage medium or by installing or copying the program onto a storage device (e.g. hard disk and/or internal memory) of a data processing device. Therefore, such a storage medium also forms the present application. The present application also provides a non-volatile storage medium, in which is stored a data processing program capable of being used to execute any one of the abovementioned method examples in the embodiments of the present invention.

The present invention also provides a machine-readable storage medium, in which is stored an instruction for causing a machine to execute any of the methods described above. Specifically, a system or apparatus equipped with a storage medium may be provided; software program code realizing the function of any one of the embodiments above is stored on the storage medium, and a computer (or CPU or MPU) of the system or apparatus is caused to read and execute the program code stored in the storage medium. Furthermore, it is also possible to cause an operating system etc. operating on a computer to complete a portion of, or all, actual operations by means of an instruction based on program code. It is also possible for program code read out from the storage medium to be written into a memory installed in an expansion board inserted in the computer, or written into a memory installed in an expansion unit connected to the computer, and thereafter instructions based on the program code cause a CPU etc. installed on the expansion board or expansion unit to execute a portion of and all actual operations, so as to realize the function of any one of the embodiments above. Embodiments of storage media used for providing program code include floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards and ROM. Optionally, program code may be downloaded from a server computer via a communication network.

The embodiments above are merely preferred embodiments of the present invention, which are not intended to define the scope of protection of the present invention. Any amendments, equivalent substitutions or improvements etc. made within the spirit and principles of the present invention shall be included in the scope of protection thereof.

## Claims

1. A method for adjusting a product model, **characterized by** comprising:
determining a life cycle data type of a product corresponding to the product model (101);
collecting, in a life cycle of the product, a parameter value which is associated with the product and complies with the life cycle data type (102);
adjusting the product model on the basis of the parameter value collected (103).

2. The method for adjusting a product model as claimed in claim 1, **characterized in that** the life cycle data type comprises one or more design parameters of the product;
the step of collecting, in a life cycle of the product, a parameter value which is associated with the product and complies with the life cycle data type, comprises: acquiring, in a production process of the product, a parameter value of the one or more design parameters from a product data management system or a manufacturing execution system.

3. The method for adjusting a product model as claimed in claim 1, **characterized in that** the life cycle data type comprises one or more performance indices of the product;
the step of collecting, in a life cycle of the product, a parameter value which is associated with the product and complies with the life cycle data type, comprises: acquiring, in a use process of the product, an index value of the one or more performance indices from a manufacturing execution system or an industrial Internet of Things.

4. The method for adjusting a product model as claimed in claim 1, **characterized in that** the life cycle data type comprises one or more design parameters of the product and one or more performance indices of the product;
the step of collecting, in a life cycle of the product, a parameter value which is associated with the product and complies with the life cycle data type, comprises: acquiring, in a production process of the product, a parameter value of the one or more design parameters from a product data management system or a manufacturing execution system, and acquiring, in a use process of the product, an index value of the one or more performance indices from a manufacturing execution system or an industrial Internet of Things .

5. The method for adjusting a product model as claimed in any one of claims 1 - 4, **characterized in that** the method further comprises:
generating a unique identifier of the life cycle data type;
the step of collecting a parameter value which is associated with the product and complies with the life cycle data type comprises:
sending the unique identifier of the life cycle data type and a data source of the life cycle data type to a collecting side;
receiving, from the collecting side, a parameter value which originates in the data source, is identified using the unique identifier, is associated with the product and complies with the life cycle data type.

6. The method for adjusting a product model as claimed in claim 5, **characterized in that** the collecting side comprises at least one of the following:
a product data management system; a manufacturing execution system; an industrial Internet of Things.

7. The method for adjusting a product model as claimed in claims 1 - 4, **characterized in that** the step of adjusting the product model on the basis of the parameter value collected comprises:
inputting the parameter value collected into the product model, enabling the product model to adjust a performance index or design parameter included in the product model on the basis of a result of comparing a statistical analysis result of the parameter value with a predetermined threshold; or
inputting the parameter value collected into a simulation tool, and adjusting a performance index or design parameter included in the product model on the basis of an output result of the simulation tool.

8. An apparatus for adjusting a product model, **characterized by** comprising:
a data type determining module (801), for determining a life cycle data type of a product corresponding to the product model;
a parameter value collecting module (802), for collecting, in a life cycle of the product, a parameter value which is associated with the product and complies with the life cycle data type;
a product model adjusting module (803), for adjusting the product model on the basis of the parameter value collected.

9. The apparatus for adjusting a product model as claimed in claim 8, **characterized in that** the life cycle data type comprises one or more design parameters of the product;
the parameter value collecting module (802) is used for acquiring, in a production process of the product, a parameter value of the one or more design parameters from a product data management system or a manufacturing execution system.

10. The apparatus for adjusting a product model as claimed in claim 8, **characterized in that** the life cycle data type comprises one or more performance indices of the product;
the parameter value collecting module (802) is used for acquiring, in a use process of the product, an index value of the one or more performance indices from a manufacturing execution system or an industrial Internet of Things.

11. The apparatus for adjusting a product model as claimed in claim 8, **characterized in that** the life cycle data type comprises one or more design parameters of the product and one or more performance indices of the product;
the parameter value collecting module (802) is used for acquiring, in a production process of the product, a parameter value of the one or more design parameters from a product data management system or a manufacturing execution system, and for acquiring, in a use process of the product, an index value of the one or more performance indices from a manufacturing execution system or an industrial Internet of Things.

12. The apparatus for adjusting a product model as claimed in any one of claims 8 - 11, **characterized by** further comprising:
an identifier generating module (804), for generating a unique identifier of the life cycle data type,
wherein the parameter value collecting module (802) is used for sending the unique identifier of the life cycle data type and a data source of the life cycle data type to a collecting side, and receiving, from the collecting side, a parameter value which originates in the data source, is identified using the unique identifier, is associated with the product and complies with the life cycle data type.

13. The apparatus for adjusting a product model as claimed in claim 12, **characterized in that** the collecting side comprises at least one of the following:
a product data management system; a manufacturing execution system; an industrial Internet of Things.

14. The apparatus for adjusting a product model as claimed in any one of claims 8 - 11, **characterized in that**
the product model adjusting module (803) is used for inputting the parameter value collected into the product model, enabling the product model to adjust a performance index or design parameter included in the product model on the basis of a result of comparing a statistical analysis result of the parameter value with a predetermined threshold; or is used for inputting the parameter value collected into a simulation tool, and adjusting a performance index or design parameter included in the product model on the basis of an output result of the simulation tool.

15. A storage medium, **characterized by** having a machine-readable instruction stored therein, the machine-readable instruction being used for executing the method as claimed in any one of claims 1 to 7.
